Europäisches Patentamt

European Patent Office

Office européen des brevets

(11) Veröffentlichungsnummer: **0 135 856**
**A2**

(12) # EUROPÄISCHE PATENTANMELDUNG

(21) Anmeldenummer: **84110480.5**

(22) Anmeldetag: **04.09.84**

(51) Int. Cl.⁴: **F 02 D 19/02**

(30) Priorität: **09.09.83 DE 3332516**

(43) Veröffentlichungstag der Anmeldung: **03.04.85**
**Patentblatt 85/14**

(84) Benannte Vertragsstaaten: **AT BE DE FR GB IT NL SE**

(71) Anmelder: **Karl Hopt GmbH,**
**D-7464 Schömberg-2 Schörzingen (DE)**

(72) Erfinder: **Hopt, Erwin, Birkenweg,**
**D-7464 Schömberg 2 (DE)**

(74) Vertreter: **Patentanwälte Kohler - Schwindling - Späth,**
**Hohentwielstrasse 41, D-7000 Stuttgart 1 (DE)**

(54) **Dosiereinrichtung für gasförmigen Treibstoff.**

(57) Eine Dosiereinrichtung dient zum Dosieren von gasförmigem Treibstoff für Verbrennungsmotoren (22), insbesondere von Kraftfahrzeugen. Es ist eine Ventileinrichtung (15) in einer Leitung (13, 20) zwischen einem Druckminderer (12) und einer Kraftstoffzumessungseinrichtung (21) des Verbrennungsmotors (22) vorgesehen. In der Ventileinrichtung (15) ist ein vorbestimmter Durchströmquerschnitt für das Gas in Abhängigkeit von der Stellung einer vom Ansaugluftstrom des Verbrennungsmotors (22) ausgelenkten Meßscheibe einstellbar. Um die Dosiereinrichtung optimal und stufenlos an Antriebsaggregate von Kraftfahrzeugen anpaßbar zu machen, wird die Meßscheibenauslenkung zur Ventileinrichtung (15) mittels einer Kurve (59) übertragen.

Anmelderin:

Karl Hopt GmbH
Elektrotechnische Fabrik
7464 Schömberg 2 Schörzingen

Stuttgart, den

P 4414 EP

Vertreter:

Kohler-Schwindling-Späth
Patentanwälte
Hohentwielstraße 41
7000 Stuttgart 1

## Dosiereinrichtung für gasförmigen Treibstoff

Die Erfindung bezieht sich auf eine Dosiereinrichtung für
gasförmigen Treibstoff für Verbrennungsmotoren mit einer
Ventileinrichtung in einer Leitung zwischen einem Druckminderer und einer Kraftstoffzumessungseinrichtung des Verbrennungsmotors, wobei in der Ventileinrichtung ein vorbestimmter Durchströmquerschnitt für das Gas in Abhängigkeit von
der Stellung einer vom Ansaugluftstrom des Verbrennungsmotors ausgelenkten Meßscheibe eingestellt wird.

Eine derartige Dosiereinrichtung ist aus der DE-OS 32 27 010 bekannt.

Soweit heutzutage Kraftfahrzeuge mit gasförmigem Treibstoff betrieben werden, erfolgt diese Versorgung des Verbrennungsmotors üblicherweise neben der üblichen Versorgung mit Benzin. Dies liegt einmal daran, daß das Tankstellennetz für Flüssiggas noch nicht die Dichte erreicht hat, die erforderlich wäre, um für ausschließlich mit gasförmigem Treibstoff betriebene Fahrzeuge eine ausreichende Versorgung sicherzustellen. Zum anderen liegt dies daran, daß die Stückzahlen von mit gasförmigem Treibstoff angetriebenen Kraftfahrzeugen zumindest in den großen Industrieländern noch zu gering ist und eine Fertigung ausschließlich mit Gas betriebener Fahrzeuge daher nicht lohnt, so daß auf absehbare Zeit Kraftfahrzeuge mit beiden Versorgungsmöglichkeiten ausgestattet sein werden.

Die Tatsache, daß aus den genannten Gründen die heute industriell erhältlichen Gaseinrichtungen für Kraftfahrzeuge so ausgelegt sind, daß sie neben der üblichen Benzineinrichtung des Kraftfahrzeuges arbeiten, eröffnet jedoch auch die Möglichkeit, bereits im Betrieb befindliche, alllein mit Benzin betriebene Kraftfahrzeuge nachträglich mit einer Gaseinrichtung auszustatten.

Von dieser Möglichkeit wird in jüngster Zeit verstärkt Gebrauch gemacht, weil einerseits die Preise für flüssige Treibstoffe stark gestiegen sind und zum anderen flüssige Treibstoffe, insbesondere Superkraftstoff, stark verbleit sind, so daß sich bei Verwendung flüssiger Treibstoffe Umweltbelastungen ergeben, die bei gasförmigem Treibstoff nicht vorhanden sind.

0135856

Der Wunsch nach einer nachträglichen Ausrüstung eines Kraftfahrzeuges mit einer Gaseinrichtung stößt jedoch in der Praxis auf erhebliche Schwierigkeiten deswegen, weil die bereits im Verkehr befindlichen Kraftfahrzeuge mit einer nahezu unüberschaubaren Vielfalt von Motoren und Kraftstoffzumessungseinrichtungen versehen sind. So werden bekanntlich die unterschiedlichen Modelle von Kraftfahrzeugherstellern jeweils mit einer ganzen Palette von Motoren angeboten, die sich durch Zylinderzahl, Leistungsabgabe und das jeweils verwendete Kraftstoffzumessungssystem (Vergaser/Einspritzsystem) unterscheiden. Darüber hinaus verwenden aber Kraftfahrzeughersteller auch für ein und dasselbe Modell mit dem gleichen Motor, beispielsweise Vergaser unterschiedlicher Zulieferer, so daß sich selbst bei ein und demselben Modell eines bestimmten Kraftfahrzeugherstellers unterschiedliche Verhältnisse für die Kraftstoffzumessung ergeben, je nachdem, welches Vergasermodell welches Zulieferers eingesetzt wurde.

Andererseits werden Umrüstungen von bereits im Verkehr befindlichen Kraftfahrzeugen auf zusätzlichen Gasantrieb in der Regel von kleineren Betrieben vorgenommen, denen nicht zugemutet werden kann, unterschiedliche Umrüstsätze für die Vielzahl von im Verkehr befindlichen Fahrzeugtypen auf Lager zu halten. Da es jedoch erforderlich ist, die einzubauende Dosiervorrichtung für den gasförmigen Treibstoff an das im Fahrzeug jeweils vorhandene Antriebsaggregat anzupassen, und zwar sowohl hinsichtlich Leerlauf-, Vollast- wie auch Teillastbetrieb, um diejenigen Vorteile auszunutzen, die der Gasantrieb bietet, sind die genannten kleineren Umrüstbetriebe durch die Vielzahl der umzurüstenden Kraftfahrzeugtypen in der Regel vollkommen überfordert.

Der Erfindung liegt daher die Aufgabe zugrunde, eine Dosiereinrichtung der eingangs genannten Art dahingehend weiterzubilden, daß mit einer einzigen Einrichtung beliebige Antriebsaggregate der unterschiedlichsten Kraftfahrzeugtypen
auf Gasbetrieb umgerüstet werden können, wobei die erforderlichen Einstellarbeiten problemlos auch von kleinen Umrüstbetrieben am umzurüstenden Kraftfahrzeug selbst vorgenommen
werden können.

Diese Aufgabe wird erfindungsgemäß dadurch gelöst, daß die
Meßscheibenauslenkung zur Ventileinrichtung mittels einer
Kurve übertragen wird.

Eine derartige Kurve kann als einziges fahrzeugspezifisches
Teil leicht ausgewechselt werden. Außerdem ist eine Optimierung über den gesamten Betriebsbereich in lücken- und stufenloser Weise möglich.

Bei einer bevorzugten Ausgestaltung der Erfindung ist die
Kurve in ihrem Verlauf mechanisch einstellbar.

Die mechanische Einstellbarkeit des Kurvenverlaufes hat den
wesentlichen Vorteil, daß mit einfachem Werkzeug, nämlich
Schraubenzieher o.dgl., der gesamte Betriebsbereich des
Antriebsaggregates vom Leerlauf über den Teillastbereich bis
zum Vollastbereich optimiert eingestellt werden kann, so daß eine Lagerhaltung von unterschiedlichen Dosiereinrichtungen für eine Vielzahl von Kraftfahrzeugtypen entfällt. Es ist vielmehr im Rahmen der vorliegenden Erfindung lediglich erforderlich, eine einzige Dosiereinrichtung am Lager zu haben, die durch einfache mechanische Justierarbeiten an das jeweils vorliegende Antriebsaggregat des Kraftfahrzeuges angepaßt werden kann, wobei eine Optimierung im gesamten Betriebsbereich möglich ist, so daß die Vorteile des Gasantriebes insgesamt ausgenutzt werden können.

Bevorzugt ist ein Ausführungsbeispiel, bei dem die Meßscheibe mit einer Kurvenscheibe gekoppelt und die Kurvenscheibe als einstückiges, auswechselbares Bauteil ausgebildet ist.

Diese Maßnahme hat den Vorteil, daß an Lagerhaltung nur ein Vorrat an Kurvenscheiben, d.h. kleinen und billigen Bauteilen erforderlich ist, während die übrigen Teile der Dosiereinrichtung einheitlich sind.

In einer bevorzugten Ausgestaltung der Erfindung ist die Meßscheibe mit einer Kurvenscheibe gekoppelt, an deren Umfang eine Mehrzahl von vorzugsweise über die Kontur der Kurvenscheibe hinaus einzeln verstellbaren Elementen angeordnet ist. Diese mechanische Lösung hat damit den Vorteil,
daß der gesamte Betriebsbereich des Antriebsaggregates durch
die Mehrzahl der Elemente überstrichen werden kann, wobei
durch eine entsprechend hohe Anzahl von Elementen auch eine
hochaufgelöste Kurve realisiert werden kann, die eine besonders gute Optimierung über den gesamten Betriebsbereich
ergibt.

Besonders zweckmäßig ist dabei eine Ausführungsform, bei der
die Elemente als Exzenter ausgebildet sind. Diese Maßnahme
hat den Vorteil, daß durch einfaches Verdrehen der Elemente
ein definiertes Vorspringen über die Kontur der Kurvenscheibe eingestellt werden kann, so daß sich eine besonders
leichte Einstellbarkeit der Elemente ergibt.

Werden in hierzu alternativer Ausgestaltung der Erfindung
die Elemente als Schieber ausgebildet, liegt darüber hinaus
der Abstand der Elemente voneinander längs der sich einstellenden Kurve fest, so daß sich ein besonders stetiger Kurvenverlauf ergibt.

Eine weitere Verstetigung der eingestellten Kurve läßt sich
dadurch erzielen, daß über die Elemente ein flexibles Band
gespannt wird. Damit ist auch der Zwischenbereich zwischen
den Elementen an den gewünschten Kurvenverlauf angepaßt, der
sich als abgerundeter Polygonzug einstellt.

Alternativ zu den vorstehend genannten mechanischen Ausführungsbeispielen kann die Kurve jedoch selbstverständlich
auch durch eine elektrische Kennlinie dargestellt werden,
deren Verlauf durch eine Mehrzahl von Einstellelementen, beispielsweise Wendelpotentiometern, einstellbar ist. Diese
Maßnahme hat den Vorteil der mechanischen Störunanfälligkeit
und des weiten Variationsbereiches für die einzustellende
Kurve.

In weiterer Ausgestaltung der Erfindung greift an der Kurve
ein Betätigungsglied der Ventileinrichtung an. Dies ergibt
eine besonders direkte Kopplung zwischen Kurve und dem
einzustellenden Durchströmquerschnitt.

Bei den mechanischen Lösungen ist das Betätigungsglied
zweckmäßigerweise eine Stange, die axial ausgelenkt wird.

Eine besonders gute Wirkung wird weiterhin dadurch erzielt,
daß das Betätigungsglied mit einer Zugfeder in Offenstellung
der Ventileinrichtung vorgespannt ist. Diese Maßnahme hat
den Vorteil, daß das Betätigungsglied bei abgeschalteter
Gaseinrichtung, d.h. bei Benzinbetrieb, von der Kurve abgehoben ist, so daß die Kraftstoffzumessungseinrichtung insgesamt völlig von der Gasdosiereinrichtung abgekoppelt ist und
damit Rückwirkungen auf den Benzinbetrieb ausgeschlossen
sind.

Eine besonders einfache Einstellung, insbesondere des Leerlaufbetriebes, ergibt sich dann, wenn zum Einstellen der
Nullage an dem an der Kurve angreifenden Ende des Betätigungsgliedes ein justierbares Endstück angeordnet ist.

Weiterhin ist eine Ausführungsform bevorzugt, bei der das
Betätigungsglied in der Ventileinrichtung einen von einer
auf einem Schlitzkörper abrollbaren Folie gebildeten Rollschieber betätigt. Diese Maßnahme hat den Vorteil, daß ein derartiger Rollschieber eine große Variationsbreite für die Charakteristik des Durchströmquerschnittes in Abhängigkeit vom Betätigungsglied zuläßt, die zusammen mit der im Rahmen dieser Erfindung einstellbaren Kurve zu einer besonders großen Flexibilität der Dosiereinrichtung führt.

Alternativ hierzu besteht erfindungsgemäß jedoch auch die Möglichkeit, daß das Betätigungsglied in der Ventileinrichtung eine in Ruhestellung auf einem Kegelsitz aufliegende Kugel betätigt. Diese Anordnung ist mechanisch besonders einfach und damit preisgünstig herstellbar, so daß sich zusätzlich ein Kostenvorteil einstellt.

Obwohl bei der erfindungsgemäßen Dosiereinrichtung die Auslenkung von beliebigen, im Ansaugluftstrom des Verbrennungsmotors angeordneten Meßscheiben ausgewertet werden kann, also beispielsweise von Stauscheiben, die axial im Ansaugrohr ausgelenkt werden, ist eine Ausführungsform besonders bevorzugt, bei der die Drehbewegung einer drehbaren Stauklappe über die in ihrem Verlauf mechanisch einstellbare Kurve übertragen wird. Eine derartige drehbare Stauklappe, wie sie an sich bekannt ist, hat den Vorteil, daß sie gegenüber einer axial verschiebbaren Stauscheibe weniger störanfällig ist, weil ein Verkanten durch die Drehbewegung ausgeschlossen ist. Außerdem eröffnet die Auswertung einer Drehbewegung die Möglichkeit, diese über eine drehbare Kurvenscheibe oder ein entsprechendes Potentiometer auszuwerten, wobei die Kurvenscheibe in der beschriebenen Form mechanisch veränderbar sein kann oder die Charakteristik des Potentiometers durch mehrere Trimmpotentiometer veränderbar ist.

8

0135856

Bevorzugt ist die Nullstellung der Stauklappe einstellbar,
so daß der Leerlaufpunkt in einfacher Weise festgelegt
werden kann.

Schließlich ist noch eine Ausführungsform bevorzugt, bei der
die Stauklappe mit einer Rückstellfeder versehen ist, deren
Rückstellkraft einstellbar ist. Diese Maßnahme hat den
Vorteil, daß mit einer einzigen Stauklappenanordnung bei
einer Vielzahl von Verbrennungsmotoren der gesamte Drehbereich der Stauklappe ausgewertet werden kann. Bei einem
Vierzylindermotor ist nämlich beispielsweise der Luftdurchsatz ein anderer als bei einem Sechszylindermotor, so daß
sich zwischen Leerlauf und Vollast unterschiedliche Werte
für den Luftdurchsatz bei beiden Motortypen ergeben. Durch
Einstellen der Rückstellkraft kann jedoch in beiden Fällen
gewährleistet werden, daß bei Vollast, d.h. bei jeweiligem
maximalen Luftdurchsatz, jeweils die mechanische Endstellung
der Stauklappe erreicht wird.

Weitere Vorteile ergeben sich aus der Beschreibung und der
beigefügten Zeichnung.

Die Erfindung ist in der Zeichnung dargestellt und wird in
der nachfolgenden Beschreibung näher erläutert. Es zeigen:

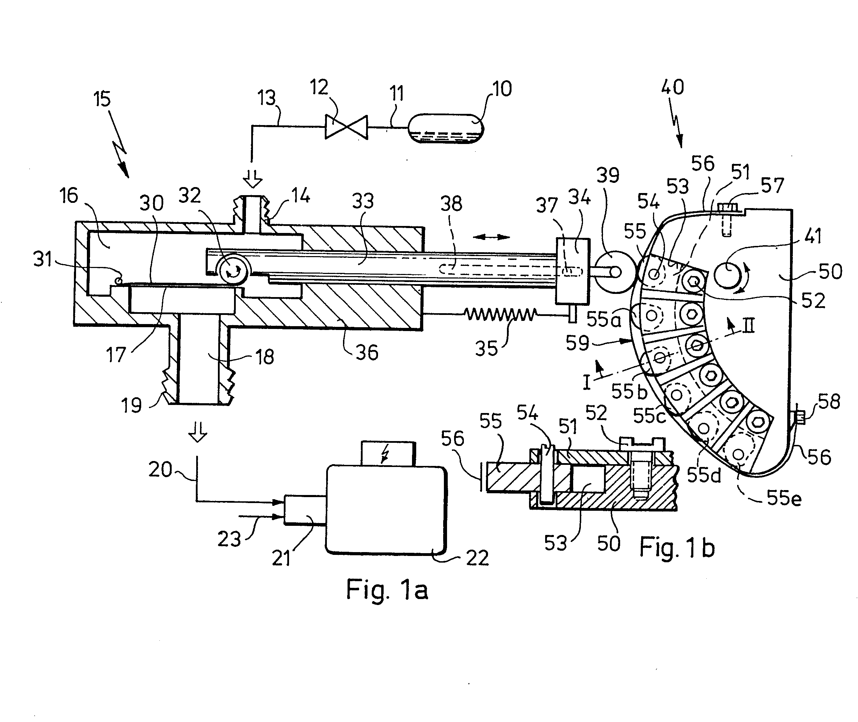

Fig. 1a    eine Gesamtansicht, teilweise schematisch, teilweise im Schnitt, einer Gasversorgungseinrichtung für
           einen Verbrennungsmotor mit einem Ausführungsbeispiel einer erfindungsgemäßen Dosiereinrichtung;

Fig. 1b    eine Schnittdarstellung entlang der Linie I-II von
           Fig. 1a;

Fig. 2    eine Schnittdarstellung einer Anordnung einer
          Stauklappe, wie sie zum Betätigen der Vorrichtung
          gemäß Fig. 1 verwendet werden kann;

Fig. 3    ein weiteres Ausführungsbeispiel einer Ventilein-
          richtung für eine erfindungsgemäße Dosiereinrich-
          tung.

In Fig. 1 ist 10 ein Flüssiggastank in einem Kraftfahrzeug,
von dem eine Flüssiggasleitung 11 zu einem Druckminderer und
-regler 12 führt. In diesem wird das Flüssiggas entspannt
und in gasförmigem Zustand über eine Gasleitung 13 zu einem
Einlaßstutzen 14 einer Ventileinrichtung 15 geleitet. Die
Ventileinrichtung 15 verfügt über eine erste Kammer 16, die
durch einen Schlitzkörper 17 von einer zweiten Kammer 18
getrennt ist. Die zweite Kammer 18 steht mit einem Auslaßstutzen 19 in Verbindung, von dem eine Gasleitung 20 zu
einer Kraftstoffzumessungseinrichtung 21 eines Verbrennungsmotors 22 führt. Die Kraftstoffzumessungseinrichtung 21 ist
ferner mit einer Benzinzuführung versehen, wie bei 23 angedeutet. Hierdurch soll kenntlich gemacht werden, daß der
Verbrennungsmotor 22 alternativ mit Gas und mit Benzin
betreibbar ist.

In der Ventileinrichtung 15 soll ein veränderlicher Durchströmquerschnitt für das Gas eingestellt werden. Hierzu ist
auf dem Schlitzkörper 17 eine Folie 30 angeordnet, die an
einem Punkt 31 fest angelenkt ist und am entgegengesetzten
Ende auf eine Rolle 32 aufgewickelt werden kann. Die Rolle
32 wird von einer Stange 33 gehalten, die axial auslenkbar
ist. Je nach Stellung der Stange 33 wird die Folie 30 mehr oder weniger auf die Rolle 32 aufgerollt, so daß ein mehr
oder weniger großer Bereich des Schlitzkörpers 17 und damit
ein entsprechender Durchströmquerschnitt für das Gas freiliegt.

Der im wesentlichen aus dem Schlitzkörper 17 und der Folie
30 gebildete sog. Rollschieber ist an sich bekannt und im
einzelnen in der bereits eingangs genannten DE-OS 32 27 010
beschrieben, deren gesamter Inhalt durch diesen Hinweis zum
Offenbarunsgehalt der vorliegenden Anmeldung gemacht wird.

An dem von der Rolle 32 abgewandten Ende der Stange 33 ist
ein justierbares Endstück 34 angeordnet, das durch ein
Gewinde o.dgl., vorzugsweise gegen die Kraft von in der
Figur nicht dargestellten Tellerfedern, auf der Stange 33
verschiebbar ist, um die effektive Gesamtlänge der Stange 33
einstellbar zu machen.

Am justierbaren Enstück 34 greift eine Zugfeder 35 an, deren
anderes Ende an einem Gehäuse 36 der Ventileinrichtung 15
angreift. Die Kraft der Zugfeder 35 ist so ausgelegt, daß
die Stange 33 in der Darstellung von Fig. 1a nach links
gezogen wird.

Das justierbare Endstück 34 trägt ferner eine Rolle 39, die
in Wirkungsverbindung mit einer Kurvenscheibe 40 steht.

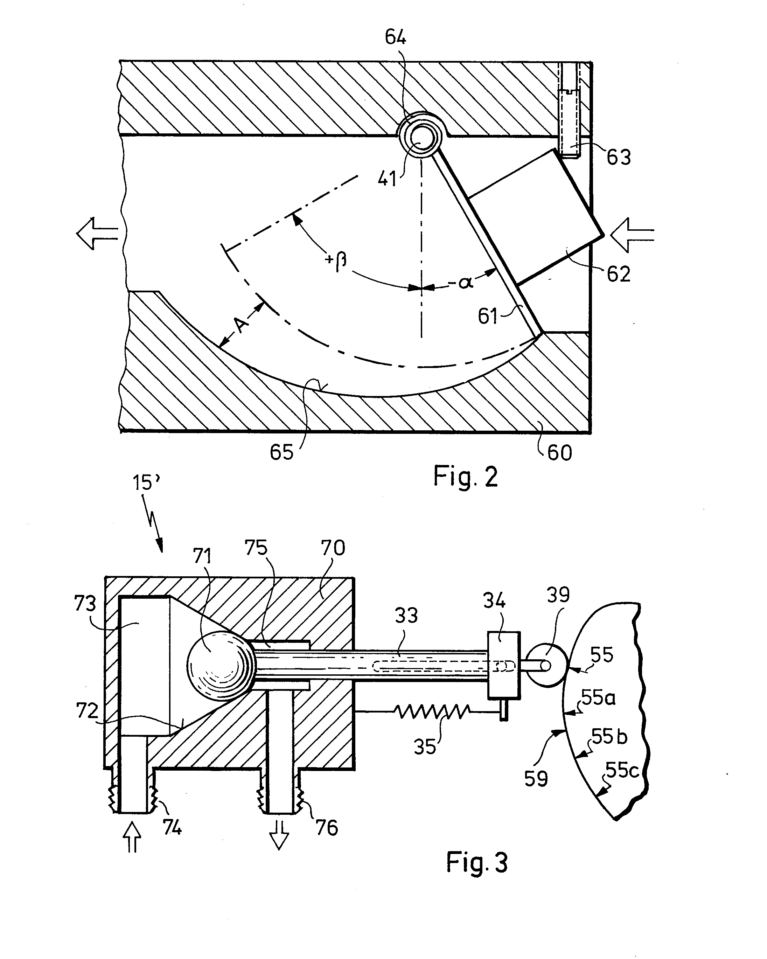

Die Kurvenscheibe 40 ist um eine Achse 41 drehbar, wie
weiter unten zu Fig. 2 noch im einzelnen erläutert wird.

Die Kurvenscheibe 40 besteht entweder aus einem einstückigen, auswechselbaren, sichelförmigen Bauteil oder im wesentlichen aus einem zur Achse 41 exzentrischen Körper 50, der
an seinem Umfang mit einer Vielzahl von Einstellelementen
versehen ist.

Wie man besonders gut aus Fig. 1b erkennt, bestehen die
Einstellelemente jeweils aus einer Platte 51, die mit einer
Schraube 52 auf einer Oberfläche des Körpers 50 fixierbar
ist. Die Platte 51 überspannt eine Ausfräsung 53, die im
Randbereich des Körpers 50 angeordnet und nach außen offen
ist. In dieser Ausfräsung 53 ist ein Exzenter 55 um eine
Achse, die von einem Stift 54 definiert ist, drehbar angeordnet. Der Stift 54 ist nur mit dem Exzenter 55 fest verbunden und läuft im übrigen in einander gegenüberliegenden
Bohrungen des Körpers 50 und der Platte 51. Zum Einstellen
des Elementes wird zunächst die Schraube 53 gelöst, so daß
die Platte 51 geringfügig vom Exzenter 55 abgehoben wird.
Durch Drehen des Stiftes 54 mittels eines Schraubenziehers
o.dgl. kann nun der Exzenter 55 beliebig nach außen geschwenkt werden, so daß sich bei mehreren Exzentern eine
Vielzahl von Punkten ergibt, die über die Kontur des Körpers 50 der Kurvenscheibe 40 vorstehen. Durch Anziehen der
Schraube 52 kann nun der Exzenter 55 in der jeweils eingestellten Stellung fixiert werden.

Wie man aus Fig. 1a erkennt, ist eine Vielzahl derartiger
Elemente mit Exzentern 55, 55a, 55b, 55c, 55d, 55e vorgesehen, die insgesamt einen bestimmten Kurvenverlauf definieren.

Um den durch die einzelnen Exzenter 55, 55a bis 55e definierten Verlauf einzelner Punkte zu verstetigen, ist ein
Band 56, beispielsweise ein elastisches Stahlband, vorgesenen, das mittels zweier Schrauben 57, 58 über die Exzenter
55, 55a bis 55e gespannt ist. Dieses Band 56 bildet somit
eine Kurve 59, auf der die Rolle 39 des justierbaren Endstückes 34 abrollen kann.

Wie man ohne weiteres aus Fig. 1a erkennen kann, ergibt sich
bei Drehung der Kurvenscheibe 40 um die Achse 41 damit ein
definierter Verlauf der axialen Auslenkung der Stange 33 in
Abhängigkeit vom Drehwinkel der Kurvenscheibe 40.

Beim Einstellen eines Motors kann zunächst der Leerlaufpunkt
dadurch eingestellt werden, daß die Kurvenscheibe 40 in die
Nullstellung gebracht wird und durch axiales Verschieben des
justierbaren Endstückes 34 derjenige Durchströmquerschnitt
am Schlitzkörper 17 eingestellt wird, der dem Leerlaufpunkt
entspricht.

Nunmehr kann die Kurvenscheibe 40 in die Vollaststellung
gebracht und der für Vollastbetrieb erforderliche Druck im
Druckregler 12 eingestellt werden. Nachdem Leerlauf- und
Vollastpunkt festliegen, kann der Teillastbereich bei definierten Drehzahlen durch Einstellen der Exzenter 55, 55a bis
55e in der oben beschriebenen Weise eingestellt werden.
Hierzu sind, wie sich aus der obenstehenden Beschreibung
ergibt, lediglich einfache mechanische Werkzeuge erforderlich und der entsprechende Kurvenverlauf kann in weiten
Bereichen praktisch beliebig durch Verdrehen der Exzenter
55, 55a bis 55e eingestellt werden.

Fig. 2 zeigt die Anordnung einer Stauklappe, wie sie bevorzugt zum Auslenken der Kurvenscheibe 40 in Fig. 1a verwendet
wird.

0135856

In einem Ansaugrohr 60 bzw. einem im Ansaugweg des Verbrennungsmotors angeordneten gesonderten Bauteil ist eine Stauklappe 61 um die Achse 61 schwenkbar angeordnet. Die Stauklappe 61 ist an ihrer Rückseite in Zuströmrichtung mit
einem Anschlagkörper 62 versehen, der mit einer Einstellschraube 63 zusammenwirkt. Wie man leicht aus Fig. 2 erkennt, kann durch Verdrehen der Einstellschraube 63 die
Nullstellung der Stauklappe 61 eingestellt werden.

Die Stauklappe 61 arbeitet, um einen besonders großen Verstellbereich zu erzielen, bezogen auf eine Senkrechte zur
Achse des Ansaugrohres 60 von einem negativen Anfangswinkel
$-\alpha$, beispielsweise $-30°$ bis zu einem Endwert $+\beta$, beispielsweise $+60°$, so daß sich ein gesamter Verstellwinkel von
beispielsweise $90°$ ergibt. Das freie Ende der Stauklappe 61
läuft in diesem Betriebsbereich auf einer Kreisbahn, die
gegenüber einer gewölbten Oberfläche 65 auf der Innenseite
des Ansaugrohres 60 verläuft. Diese Oberfläche 65 hat in an
sich bekannter Weise einen größeren Krümmungsradius und
einen anderen Krümmungsmittelpunkt als die Bahn des freien
Endes der Stauklappe 61, so daß zwischen dem freien Ende der
Stauklappe 61 und der Oberfläche 65 bei größer werdendem
Auslenkwinkel der Stauklappe 61 ein immer größerer freier
Querschnitt entsteht, wie mit "A" in Fig. 2 angedeutet.

Die Stauklappe 61 ist in ihrer Achse 41 mit einer Spiral-
Rückstellfeder 64 versehen, gegen deren Kraft der Ansaugluftstrom die Stauklappe 61 auslenkt. Die Rückstellkraft der
Rückstellfeder 64 ist einstellbar, so daß die volle Auslenkung der Stauklappe 61 an verschiedene Durchströmraten der
Ansaugluft angepaßt werden kann, wie sie bei unterschiedlichen Verbrennungsmotoren jeweils bei Vollast auftreten.

Fig. 3 zeigt schließlich noch eine weitere Ausführungsform einer Ventileinrichtung 15', wie sie anstelle des in Fig. 1a dargestellten Rollschiebers verwendet werden kann.

Bei diesem Ausführungsbeispiel wird wiederum von einer Stange 33 ausgegangen, deren Zuammenwirken mit der Kurve 59 demjenigen gemäß Fig. 1a entspricht, weswegen in Fig. 3 insoweit gleiche Bezugszeichen verwendet wurden.

Abweichend vom Ausführungsbeispiel gemäß Fig. 1 ist beim Ausführungsbeispiel gemäß Fig. 3 jedoch ein Gehäuse 70 vorgesehen, in das ein Ende der Stange 33 ausläuft. Dieses Ende der Stange 33 trägt eine Kugel 71, die mit einem Kegelsitz 72 zusammenwirkt. Der Kegelsitz 72 bildet einen Teil einer ersten Kammer 73, an die ein Einlaßstutzen 74 angeschlossen ist. Die Kugel 71 versperrt in der in Fig. 3 eingezeichneten Ruhestellung die erste Kammer 73 gegenüber einer zweiten Kammer 75, die mit einem Auslaßstutzen 76 verbunden ist. In der Ruhestellung kann jedoch auch ein geringer, dem Leerlaufbetrieb entsprechender Restquerschnitt offen bleiben.

Die Wirkungsweise der Ausführungsbeispiele ist wie folgt:

Befindet sich das Fahrzeug im Benzinbetrieb, wird der Ventilanordnung 15 gemäß Fig. 1a bzw. der Ventilanordnung 15' gemäß Fig. 3 über die Stutzen 14 bzw. 74 kein Druck zugeführt, weil der Druckminderer und -regler 12 die Gaszufuhr sperrt. In diesem Falle zieht sich die Zugfeder 35 zusammen, so daß die Rolle 39 von der Kurve 59 abgehoben wird. Eine Rückwirkung der Gasdosiereinrichtung auf die Stauklappe im Benzinbetrieb ist hierdurch ausgeschlossen.

Wird nun jedoch auf Gasbetrieb umgeschaltet und der Druckminderer und -regler 12 geöffnet, gelangt Druck über den
Stutzen 14 bzw. 74 in die erste Kammer 16 bzw. 73. Da zunächst die Kraftstoffzumessungseinrichtung 21 des Verbrennungsmotors 22 geschlossen ist, baut sich in der ersten
Kammer 16 bzw. 73 ein verhältnismäßig hoher Druck auf, der
die Stange 33 bei beiden Ausführungsbeispielen gemäß Fig. 1a
und Fig. 3 in die rechte Richtung schiebt. Bei einem Druck
von 0,5 bar und einem Stangendurchmesser von 8 mm ergibt
sich hierdurch etwa eine Kraft von 250 p, die so bemessen
ist, daß sie die Kraft der Zugfeder 35 überwindet und die
Rolle 39 in Anlage an die Kurve 59 (Leerlaufposition)
bringt. Wird nun durch Betätigen der Kraftstoffzumessungseinrichtung 21 Luft angesaugt, wird die Stauklappe 61 ausgelenkt und die Kurvenscheibe 40 verdreht. Die Stange 33 wird
demzufolge nach links ausgelenkt. Beim Ausführungsbeispiel
gemäß Fig. 1a wird nun ein Teil der Folie 30 auf die Rolle
32 aufgerollt, so daß ein Bereich des Schlitzkörpers 17
freiliegt und sich hierdurch ein bestimmter Durchströmquerschnitt ergibt. Beim Ausführungsbeispiel gemäß Fig. 3
hebt demgegenüber die Kugel 71 vom Kegelsitz 72 ab und es
ergibt sich zwischen der Kugel 71 und dem Kegelsitz 72 ein
bestimmter Durchströmquerschnitt.

Aufgrund des Druckgefälles zwischen erster Kammer 16 bzw. 73
und zweiter Kammer 18 bzw. 75 kehrt die Stange 33 mit der
Rolle 32 bzw. der Kugel 71 stets wieder in die rechte Endstellung zurück, wenn die angesaugte Luftmenge abnimmt und
die Kurvenscheibe 40 damit wieder in die Ausgangsstellung
zurückkehrt. Im Teillastbereich wird demgegenüber die Auslenkung der Stange 33 durch die Einstellung der Exzenter 55,

0135856

55a bis 55e definiert, so daß der Verlauf des Durchströmquerschnittes als Funktion der angesaugten Luftmenge insgesamt jeweils optimal auf ein bestimmtes Antriebsaggregat
eines Kraftfahrzeuges angepaßt werden kann.

Es versteht sich insbesondere, daß das in Fig. 1a dargestellte Ausführungsbeispiel für die mechanisch einstellbaren
Elemente lediglich beispielhaft zu verstehen ist. Statt der
dort dargestellten Exzenter 55, 55a bis 55e kann selbstverständlich ebenso gut eine Anordnung mit Schiebern verwendet
werden, die in den Ausfräsungen 53 nach außen verschiebbar
und an ihrem freien Ende mit einer Abrundung versehen sind.
Auch radial angeordnete, nach außen vorstehende Schrauben und
ähnliche Einstellorgane sind im Rahmen der vorliegenden
Erfindung verwendbar. Schließlich wurde bereits eingangs
erwähnt, daß statt der mechanischen Kurvenscheibe 40 selbstverständlich auch eine elektronische Kennlinie mit mechanischen Einstellmitteln, beispielsweise Wendelpotentiometern,
verwendet werden kann, ohne den Rahmen der vorliegenden
Erfindung zu verlassen.

Patentansprüche

1.  Dosiereinrichtung für gasförmigen Treibstoff für Verbrennungsmotoren (22) mit einer Ventileinrichung (15, 15') in einer Leitung (13, 20) zwischen einem Druckminderer (12) und einer Kraftstoffzumessungseinrichtung (21) des Verbrennungsmotors (22), wobei in der Ventileinrichtung (15, 15') ein vorbestimmter Durchströmquerschnitt für das Gas in Abhängigkeit von der Stellung einer vom Ansaugluftstrom des Verbrennungsmotors (22) ausgelenkten Meßscheibe eingestellt wird, dadurch gekennzeichnet, daß die Meßscheibenauslenkung ($-\alpha$, $+\beta$) zur Ventileinrichtung (15, 15') mittels einer Kurve (59) übertragen wird.

2.  Dosiereinrichtung nach Anspruch 1, dadurch gekennzeichnet, daß die Kurve (59) in ihrem Verlauf mechanisch einstellbar ist.

3.  Dosiereinrichtung nach Anspruch 1 oder 2, dadurch gekennzeichnet, daß die Meßscheibe mit einer Kurvenscheibe gekoppelt und die Kurvenscheibe als einstückiges, auswechselbares Bauteil ausgebildet ist.

4.  Dosiereinrichtung nach Anspruch 1 oder 2, dadurch gekennzeichnet, daß die Meßscheibe mit einer Kurvenscheibe (40) gekoppelt ist, an deren Umfang eine Mehrzahl von vorzugsweise über die Kontur der Kurvenscheibe (40) hinaus einzeln verstellbaren Elementen angeordnet ist.

5.  Dosiereinrichtung nach Anspruch 3, dadurch gekennzeichnet, daß die Elemente als Exzenter (55, 55a bis 55e) ausgebildet sind.

6. Dosiereinrichtung nach Anspruch 3, dadurch gekennzeichnet, daß die Elemente als Schieber ausgebildet sind.

7. Dosiereinrichtung nach einem der Ansprüche 3 bis 6, dadurch gekennzeichnet, daß über die Elemente ein flexibles Band (56) gespannt ist.

8. Dosiereinrichtung nach einem der Ansprüche 1 bis 7, dadurch gekennzeichnet, daß an der Kurve (59) ein Betätigungsglied der Ventileinrichtung (15, 15') angreift.

9. Dosiereinrichtung nach Anspruch 8, dadurch gekennzeichnet, daß das Betätigungsglied mit einer Zugfeder (35) in Offenstellung der Ventileinrichtung (15, 15') vorgespannt ist.

10. Dosiereinrichtung nach einem der Ansprüche 8 oder 9, dadurch gekennzeichnet, daß zum Einstellen der Nullage an dem an der Kurve (59) angreifenden Ende des Betätigungsgliedes ein justierbares Endstück (34) angeordnet ist.

11. Dosiereinrichtung nach einem der Ansprüche 8 bis 10, dadurch gekennzeichnet, daß das Betätigungsglied in der Ventileinrichtung (15) einen von einer auf einem Schlitzkörper (17) abrollbaren Folie (30) gebildeten Rollschieber betätigt.

12.  Dosiereinrichtung nach einem der Ansprüche 8 bis 10,
     dadurch gekennzeichnet, daß das Betätigungsglied in
     der Ventileinrichtung (15') eine in Ruhestellung auf
     einem Kegelsitz (72) aufliegende Kugel (71) betätigt.

13.  Dosiereinrichtung nach einem der Ansprüche 1 bis 12,
     dadurch gekennzeichnet, daß die Meßscheibe eine drehbare Stauklappe (61) ist, deren Drehbewegung ($-\alpha$, $+\beta$)
     über die in ihrem Verlauf mechanisch einstellbare
     Kurve übertragen wird.

14.  Dosiereinrichtung nach Anspruch 13, dadurch gekennzeichnet, daß die Nullstellung der Stauklappe (61)
     einstellbar ist.

15.  Dosiereinrichtung nach einem der Ansprüche 13 oder 14,
     dadurch gekennzeichnt, daß die Stauklappe (61) mit
     einer Rückstellfeder (64) versehen ist und daß deren
     Rückstellkraft einstellbar ist.

0135856

1/2

Fig. 1a

Fig. 1b

2/2    0135856

Fig. 2

Fig. 3